(19) Europäisches Patentamt
European Patent Office
Office européen des brevets

(11) Publication number: **0 134 691**
**B1**

(12) # EUROPEAN PATENT SPECIFICATION

(45) Date of publication of patent specification: **17.08.88**

(51) Int. Cl.$^4$: **C 08 G 59/42**, C 08 G 59/62, C 09 D 3/58

(21) Application number: **84305164.0**

(22) Date of filing: **30.07.84**

(54) **Compositions curable at ambient or slightly elevated temperatures comprising a polyhxdroxy compound together with a specified epoxide/carboxylic anhydride crosslinking system.**

(30) Priority: **19.08.83 GB 8322399**

(43) Date of publication of application:
**20.03.85 Bulletin 85/12**

(45) Publication of the grant of the patent:
**17.08.88 Bulletin 88/33**

(84) Designated Contracting States:
**AT BE CH DE FR GB IT LI NL SE**

(56) References cited:
**FR-A-1 199 394**
**FR-A-1 228 023**
**US-A-2 890 196**

(73) Proprietor: **IMPERIAL CHEMICAL INDUSTRIES PLC**
**Imperial Chemical House Millbank**
**London SW1P 3JF (GB)**

(72) Inventor: **Horley, Susan Mary**
**20, Tamar Close Loudwater**
**High Wycombe Buckinghamshire (GB)**
Inventor: **Palluel, Auguste Louis Lucien**
**11, Bolton Crescent**
**Windsor Berkshire (GB)**
Inventor: **Taylor, Philip Louis**
**17, Bartelotts Road**
**Slough Berkshire (GB)**

(74) Representative: **Wood, Dennis John Cecil et al**
**Imperial Chemical Industries PLC**
**Legal Department: Patents**
**PO Box 6**
**Welwyn Garden City Herts, AL7 1HD (GB)**

**EP 0 134 691 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to curable compositions based upon a hydroxyl group-containing compound together with a specified epoxide/carboxylic anhydride crosslinking system, the compositions having the capability of curing at ambient or slightly elevated temperatures to form solid products possessing valuable properties. In particular, the invention provides coating compositions from which protective and/or decorative films may be obtained under such curing conditions.

Coating compositions containing as the principal film-forming constituent a hydroxyl group-containing polymer, such as an acrylic resin, are very well known. In the majority of cases, these compositions also comprise an aminoplast resin, such as an alkylated melamine-formaldehyde condensate, as crosslinking agent for the acrylic resin and the compositions are of the thermosetting type, that is to say they require for their curing the application of heat, at temperatures from about 80°C upwards. Moreover it is often necessary to assist the curing process by the addition of a suitable catalyst, usually a strong acid such as p-toluenesulphonic acid.

For certain end-uses, however, it is not convenient to have to apply heat in order to cure the coating composition after its application to a substrate. An important instance of such an end-use is the refinishing of automobile bodies, where it is much to be preferred that repair of localised damage to the paintwork occasioned either during manufacture or in subsequent use of the vehicle can be effected at or around room temperature. A class of coating compositions which satisfy this requirement is described in British Specification No. 2,097,409A; these comprise a hydroxyl group-containing acrylic resin, a specified kind of alkylated melamine-formaldehyde resin and an acid catalyst consisting of a blend of two alkylated arylsulphonic acids, in one of which the alkyl chain is relatively short and in the other of which it is relatively long. Such compositions, however, suffer from the disadvantage that the coatings derived from them exhibit poor water-resistance.

We have now developed crosslinking compositions which cure readily at normal, or even low, ambient temperatures and which are not subject to the above-mentioned disadvantage. When appropriately formulated, they are particularly suitable for automobile refinish applications, but they may also be formulated for a variety of other end-uses, as indicated below.

The compositions of the invention comprise a compound containing at least two hydroxyl groups and a crosslinking system consisting of a compound containing two or more carboxylic anhydride groups together with a compound containing two or more epoxide groups.

In GB—A—1,583,316 there are described hardenable coating compositions comprising a hydroxyl group-containing oligomer or polymer, a compound containing at least two carboxylic anhydride groups and a chelated aluminium or titanium compound. These compositions do not, however, include a polyepoxide except to the limited extent that the oligomer or polymer may contain oxirane rings as well as hydroxyl groups.

Coating compositions are described in EP—A—0048128 which comprise a hydroxy component and a polymeric component containing a plurality of cyclic carboxylic anhydride groups, one of which components is film-forming, and an amine catalyst for the hydroxyl-anhydride curing reaction. No epoxide group-containing material is present in these compositions.

US—A—3,897,514 discloses the curing at 60°C of hydroxy-terminated polybutadiene with a carboxylic anhydride, an epoxide and a chromium compound. The second of these constituents, however, contains only one anhydride group per molecule and the curing reaction takes place only slowly, even at the moderately elevated temperature in question.

WO—A—84 00768 describes thermosetting coating compositions comprising an acrylic copolymer carrying epoxide and hydroxyl groups, a specified dicarboxylic anhydride and an amine resin crosslinking agent. The second of these constituents, however, does not contain more than one anhydride group per molecule and the compositions require high temperatures (in the region of 130°C) to effect curing. WO—A—84 00770 and 8400771 describe similar systems, except that the first constituent carries hydroxyl groups only and a separate, epoxide group-containing constituent is included.

According to the present invention there is provided a curable composition comprising:

(i) a compound containing in the molecule at least two hydroxyl groups;

(ii) a compound containing in the molecule at least two cyclic carboxylic anhydride groups;

(iii) a compound containing in the molecule at least two epoxide groups, the components (i), (ii) and (iii) being defined in claim 1; and optionally

(iv) a catalyst as hereinbelow defined.

The hydroxyl group-containing component (i) of the composition may be monomeric, oligomeric or polymeric.

Suitable monomeric components (i) include simple diols and polyols such as ethylene glycol, propane-1,2-diol, propane-1,3-diol, butane-1,2-diol, butane-1,3-diol, butane-1,4-diol, hexane-1,6-diol, glycerol, trimethylolpropane and hexane-1,2,6-triol.

Suitable oligomeric components (ii) include oligomers of styrene and allyl alcohol such as that sold by Monsanto Chemical Company under the designation "RJ—100", polypropylene glycols of molecular weight in the range 400 to 4000 and oligomers of caprolactone such as that sold by Laporte Chemicals under the name "Capa 200" ("Capa" is a Registered Trade Mark).

Suitable polymeric components (i) include hydroxyl group-containing polymers of both the addition and the condensation types. Of the former types, there may be mentioned in particular the film-forming acrylic resins obtained by the polymerisation of at least on hydroxyalkyl ester of acrylic acid or methacrylic acid, preferably in conjunction with one or more alkyl esters of acrylic acid or methacrylic acid or other copolymerisable monomers free from hydroxyl groups. Examples of suitable hydroxyl group-containing monomers include 2-hydroxyethyl acrylate, 2-hydroxyethyl methacrylate, 2-hydroxypropyl acrylate, 2-hydroxypropyl methacrylate, hydroxyisopropyl acrylate, hydroxyisopropyl methacrylate and commercially available mixtures of these monomers, as well as 4-hydroxybutyl acrylate and methacrylate. Equally suitable are hydroxyl group-containing monomer units derived from the reaction, either before or after polymerisation, of a carboxyl group-containing monomer, such as acrylic or methacrylic acid, with a monoepoxide; or from the reaction of an epoxide group-containing monomer, such as glycidyl methacrylate or acrylate, with a monocarboxylic acid.

Examples of suitable hydroxyl-free monomers include the alkyl acrylates and methacrylates such as ethyl acrylate, butyl acrylate, 2-ethylhexyl acrylate, methyl methacrylate, ethyl methacrylate and butyl methacrylate, and vinylaromatic compounds such as styrene and vinyl toluene. There may also be included minor proportions of vinyl esters such as vinyl acetate and vinyl propionate, and of acrylonitrile or methacrylonitrile.

There may also, if desired, be included, in the monomers from which a hydroxyl group-containing addition polymer component (i) is derived, a carboxylic group-containing monomer; suitable ethylenically unsaturated carboxylic acids include in particular acrylic acid, methacrylic acid, crotonic acid and itaconic acid. The incorporation in this way of carboxylic groups into the polymer (i) may, for example, assist the dispersion of pigments into the coating composition.

In the case where the composition according to the invention is intended to be used for the production of protective and/or decorative coatings, it is preferred that the hydroxyl group-containing component (i) should have a molecular weight of at least 400, more preferably of at least 1000.

A particular class of hydroxyl group-containing addition polymers which are suitable for use in coating compositions according to the invention are those obtained by the copolymerisation of:—

(a) a monomer which is the 1:1 molar adduct either of an α,β-ethylenically unsaturated carboxylic acid with the glycidyl ester of an aliphatic carboxylic acid or of the glycidyl ester of an α,β-ethylenically unsaturated carboxylic acid with an aliphatic carboxylic acid,

(b) a hydroxyalkyl ester of an α,β-ethylenically unsaturated carboxylic acid and

(c) one or more α.β-ethylenically unsaturated monomers free from hydroxyl groups,

the said adduct being formed before, during or after the copolymerisation reaction.

The monomer adduct (a) from which this class of hydroxyl group-containing copolymer is in part derived results from one or other of the following reactions:

(1) 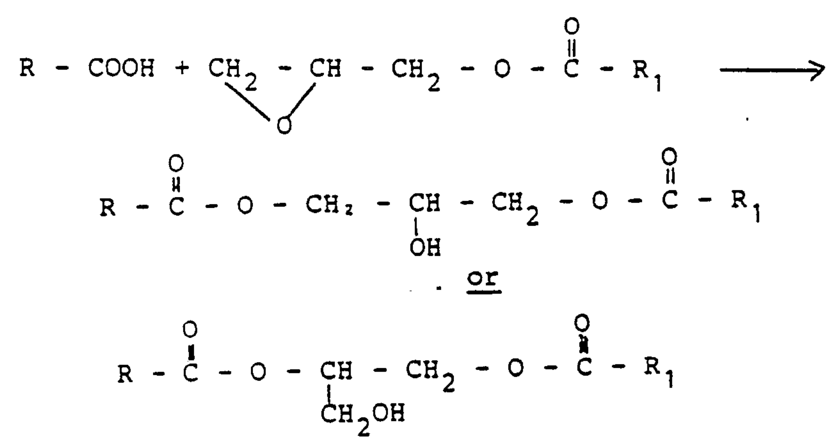

or

(2) 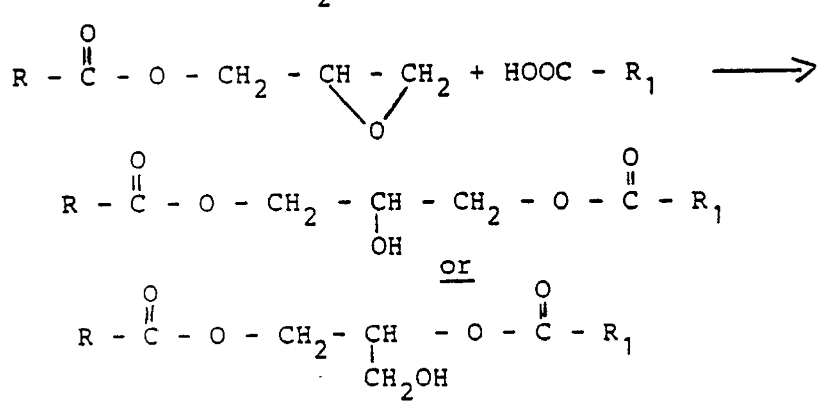

or

where R represents an ethylenically unsaturated grouping and $R_1$ represents an aliphatic group. Preferably R is the grouping

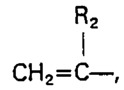

where $R_2$ is either hydrogen or methyl, and preferably $R_1$ is the tertiary grouping

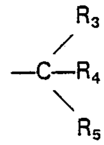

where $R_3$, $R_4$ and $R_5$ are individually straight chain alkyl groups containing from 1 to 12 carbon atoms provided that the grouping $R_1$ as a whole contains from 4—26 carbon atoms.

In the case where the monomer adduct (a) is formed by means of the reaction (1) above, examples of suitable ethylenically unsaturated carboxylic acids include those which have been mentioned above; an example of a suitable glycidyl ester of a tertiary aliphatic carboxylic acid is the product sold by the Shell Chemical Company under the name "Cardura" E10 ("Cardura" is a Registered Trade Mark), represented by the above formula where $R_1$ is a mixture of saturated tertiary aliphatic hydrocarbon radicals containing from 8 to 10 carbon atoms.

In the case where the monomer adduct (a) is formed by means of the reaction (2) above, examples of suitable glycidyl esters of ethylenically unsaturated carboxylic acids include glycidyl acrylate and glycidyl methacrylate, and an example of a suitable tertiary aliphatic carboxylic acid is the product sold by the Shell Chemical Company under the name "Versatic" acid ("Versatic" is a Registered Trade Mark), which is a mixture of saturated tertiary aliphatic carboxylic acids containing from 9 to 11 carbon atoms.

The 1:1 addition reaction of the carboxylic acid with the glycidyl compound can, in either case, conveniently be effected, with good conversion of the reactants, at a temperature in the range 80—160°C for a period of from 5 minutes to 8 hours. Where the adduct (a) is to be formed before the polymerisation step, the carboxylic acid and the glycidyl compound are suitably pre-reacted under these conditions and the product subsequently copolymerised with the monomers (b) and (c). Where the polymerisation step is itself performed under the stated temperature and time conditions, however, pre-reaction of the carboxylic acid with the glycidyl compound is not essential and the formation of the adduct and the copolymerisation can conveniently be carried out simultaneously. As the third alternative, the unsaturated component of the adduct, whether the carboxylic acid or the glycidyl compound, can first of all be copolymerised with the monomers (b) and (c), and the resulting copolymer then reacted with the other component under the stated conditions.

Suitable monomers (b) and (c) include those hydroxyl group-containing monomers and hydroxyl-free monomers which have been mentioned above. Here also there may be included, in the monomers being polymerised, a carboxyl group-containing monomer such as any of the unsaturated carboxylic acids mentioned above; when present, such monomer is additional to any unsaturated carboxylic acid which has been employed in the production of the adduct (a), as described above.

The proportions of the monomers (a), (b) and (c), and of any carboxyl group-containing monomer included, which are employed in the production of this class of addition polymer component (i) may vary considerably, depending upon the characteristics desired in the coating ultimately obtained and upon the actual identities of the monomers selected, and it is therefore difficult to state any generally applicable ranges of values. Howver, an important characteristic of the addition polymer, in relation to its crosslinking potential, is its hydroxyl value and this preferably lies in the range 70—200 mg KOH/g (based on 100% non-volatiles), more preferably in the range 100 to 160 mg KOH/g. The skilled person will readily be able to adjust the proportions of the selected monomers accordingly. Another characteristic of the addition polymer which is relevant to its film-forming potentiality is its glass transition temperature (Tg). As is recognised in the coatings art, this should preferably lie in the range −20°C ro +40°C, more preferably in the range −10°C to +30°C. Yet another relevant characteristic is the molecular weight of the addition polymer; this, again as recognised in the art, preferably lies in the range 5,000—30,000, more preferably 10,000—15,000 (values of $\overline{M}_\omega$, as determined by gel permeation chromatography), so as to give a satisfactory compromise between the achievement of good mechanical properties in the desired coating and the avoidance of excessively high composition viscosity at conventional film-forming solids contents.

An alternative to an addition polymer, the hydroxyl group-containing component (i) is a polyester obtained by the condensation of a polyhydric alcohol and a polycarboxylic acid. We include in this term the alkyd resins which are obtained from such starting materials with the addition of constituents supplying residues of fatty acids derived from natural drying oils, or semi-drying oils, or even oils having no air-drying capabilities. We also include polyester resins not incorporating any natural oil residues. All these resins normally contain a proportion of free hydroxyl groups.

Suitable polyhydric alcohols for the production of polyester resins include ethylene glycol, propylene glycol, butylene glycol, 1;6-hexylene glycol, neopentyl glycol, diethylene glycol, triethylene glycol, tetraethylene glycol, glyceral, trimethylolpropane, trimethylolethane, pentaerythritol, dipentaerythritol, tripentaerythritol, hexane triol, oligomers of styrene and allyl alcohol (for example that sold by Monsanto Chemical Company under the designation RJ 100) and the condensation products of trimethylolpropane with ethylene oxide or propylene oxide (such as the products known commerically as "Niax" triols). Suitable polycarboxylic acids include succinic acid (or its anhydride) adipic acid, azelaic acid, sebacic acid, maleic acid (or its anhydride), fumaric acid, muconic acid, itaconic acid, phthalic acid (or its anhydride), isophthalic acid, terephthalic acid, trimellitic acid (or its anhydride) and pyromellitic acid (or its anhydride). Where it is desired to produce air-drying alkyd resins, suitable drying oil fatty acids which may be used include those derived from linseed oil, soya bean oil, tall oil, dehydrated castor oil, fish oils or tung oil. Other oil fatty acids, of semi-drying or non-drying types, which may be used include those derive from safflower oil, sunflower oil and cottonseed oil. Normally it is preferred that the oil length of such an alkyd resin sould not exceed 50%. Monofunctional saturated carboxyl acids may also be incorporated in order to confer plasticity on the polyester. Such acids may be, for example, $C_4$—$C_{20}$ saturated aliphatic acids, benzoic acid, p-tertbutyl benzoic acid and abietic acid. In addition, monofunctional hydroxy compounds may be incorporated in order to control the chain length of the polyester or to confer certain desirable compatibility properties upon it; suitable monohydroxy compounds include benzylalcohol, cyclohexyl alcohol, saturated or unsaturated fatty alcohols and condensation products of ethylene oxide or propylene oxide with monofunctional alcohols (e.g. the methoxy-polyethylene glycol obtained by reaction of ethylene oxide with methanol).

The hydroxyl group-containing component (i) may be introduced either as a solution in an appropriate solvent, or as a stable dispersion in an organic liquid which is not a solvent for the component (i) but is a solvent for the other components of the composition or is miscible with another liquid which is a solvent for those components. In particular, the dispersion may be a sterically stabilised dispersion obtained by the polymerisation of suitable monomers in the presence of an amphiphatic stabilising agent, as described in "Dispersion Polymerisation in Organic Media", ed. K. E. J. Barrett (John Wiley and Sons, 1975).

Compounds containing in the molecule at least two cyclic carboxylic anhydride groups, which are suitable for use as the component (ii) of the compositions of the invention, include, for example, the trimellitic anhydride adducts of the general formula:

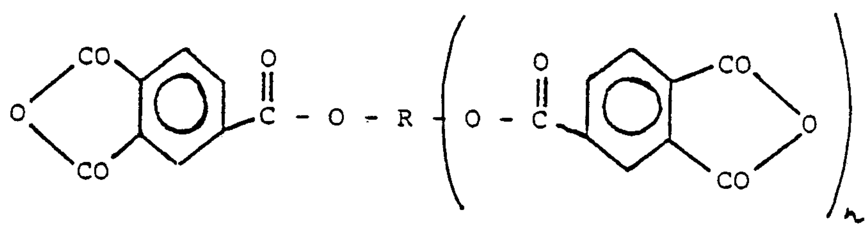

wherein R is a single hydrocarbon radical or a mixture of hydrocarbon radicals, preferably having from 2 to 12 carbon atoms and n=1 or 2, and wherein the aromatic nuclei may be substituted with one or more halogen atoms and/or one or more hydrocarbyl groups. Particularly suitable adducts are the trimellitic anhydride-polyhydric alcohol adducts, for example the adducts with glycols such as ethylene glycol, propylene glycol or neopentyl glycol, or with triols such as glycerol or trimethylolpropane; the ethylene glycol adduct, of the formula

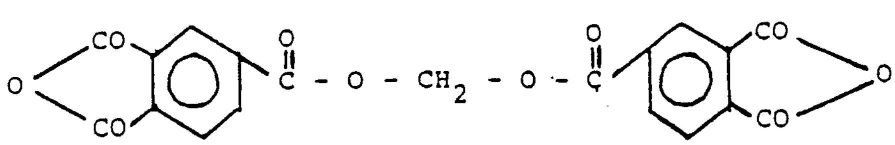

is believed to be a major constituent of the product sold by Shell Chemical Company under the name "Epikure" F50 ("Epikure" is a Registered Trade Mark). These materials, resulting from the condensation of two compounds at least one of which is polyfunctional, tend to be mixtures of species and they may contain some carboxylic acid groups in addition to anhydride groups.

Other suitable polyanhydrides include the benzophenone tetracarboxylic dianhydrides of the formula:

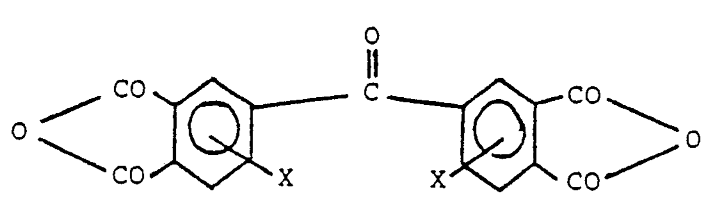

wherein X represents hydrogen or a halogen, $—NO_2$, —COOH or $—SO_3H$ substituent and may be the same or different in the two aromatic nuclei. Examples of benzophenone tetracarboxylic dianhydrides include 3,3',4,4'-benzophenone tetracarboxylic dianhydride; 2-bromo-3,3',4,4'-benzophenone tetracarboxylic dianhydride, and 5-nitro-3,3',4,4'-benzophenone tetracarboxylic dianhydride.

Compounds containing in the molecule at least two epoxide groups, which are suitable for use as the component (iii) of the compositions of the invention, include the epoxy resins which are obtained by condensation of epichlorhydrin with bisphenol-A and have the general formula

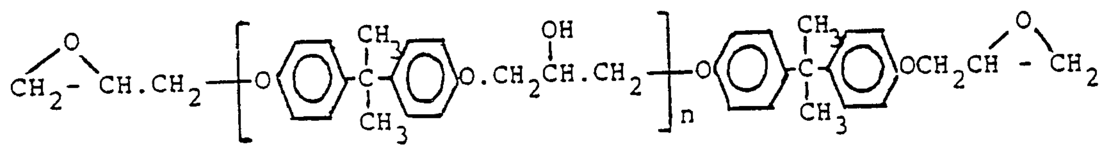

where n may have any value from zero up to about 12. Examples of such epoxy resins include "Epikote" 828, "Epikote" 1001 and "Epikote" 1004, which have compositions corresponding to the above formula where n has an approximate average value of 0.1, 2 and 3.7 respectively ("Epikote" is a Registered Trade Mark of Shell Chemical Company). Other suitable compounds are the bis-epoxide

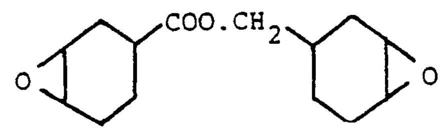

sold by Union Carbide Chemicals and designated ERL 4221, and the bis-epoxides

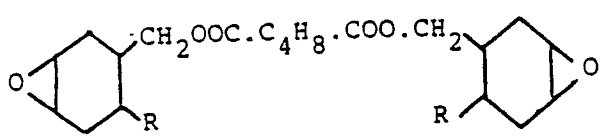

where R may be H or $CH_3$, as in the products sold by Union Carbide Chemicals and designated ERL 4299 and 4289.

As indicated above, an optional further component (iv) of the compositions of the invention is a catalyst for the curing reaction, which we define as being any substance which is conventionally used in the coatings art for the catalysis of reactions between expoxide groups and carboxyl groups, for example for catalysing the curing of epoxy resins with polycarboxylic acids. Suitable such catalysts include tertiary amines such as benzyldimethylamine, quaternary ammonium hydroxides and salts such as benzyltrimethylammonium hydroxide and chloride and the chromium compound designated Accelerator AMC 2 and sold by Cordova Chemicals Incorporated. It is not essential that such a catalyst should be present in the composition, but in most cases it is to be preferred that one is present.

Relative proportions of the components (i) to (iv) of the compositions depend to some extent on the chemical nature of these components. In general, the polyanhydride (ii) is preferably employed in a proportion equivalent to about one anhydride group per hydroxyl group in the component (i). A stoichiometric proportion is satisfactory particularly when all the hydroxyl groups in that component are primary; where a substantial proportion of them are secondary, it may be desirable to use rather less of the anhydride than this, otherwise the relatively slower reaction with the secondary groups may result in the cured product containing unchanged polyanhydride, with deleterious effects on its properties. The polyepoxide (iii) is in turn preferably employed in a proportion equivalent to about two epoxide groups per carboxyl group in the notional adduct formed from components (i) and (ii). This takes into account the carboxyl groups which are generated by the reaction of each anhydride group with a hydroxyl group, together with any free carboxyl groups which may be present in the polyanhydride before reaction, as mentioned above. The catalyst (iv), when used, is employed in a proportion which is found by experimentation to give the optimum result in terms of rate of cure of the composition and properties of the product obtained. The appropriate proportion is usually found to be rather higher than that which is conventionally used in the curing of epoxy resins with polycarboxylic acids, for example in the range 1% to 10% by weight of the amount of polyepoxide taken.

The compositions may contain, in addition to the main components (i) to (iv), other materials which are conventional according to the particular end-use for which the compositions are intended. Thus, in the case of coating compositions, additives such as pigments, extenders or fillers, thinners, flow control agents and plasticisers may be incorporated.

The compositions of the invention may be prepared ready for use, e.g. for application as a coating to a substrate, by simply blending together the separate constituents (i) to (iv) and any pigments, solvents or other ingredients required. In most cases, it will be preferable to include a proportion of a volatile organic

liquid diluent which is a solvent for all the components, for example acetone, methyl ethyl ketone or butyl acetate; however, as already indicated, it is possible for the component (i) to be present in a state of stable dispersion rather than of solution, provided that the other components are in solution. For simplicity of operation, it is possible to combine certain of the components without causing problems of stability on storage. Thus the hydroxyl group-containing component (i) and the catalyst (iv) may be pre-blended, and either the anhydride (ii) or the polyepoxide (iii) may be incorporated in a solvent thinner, where such is used (it is, however important that any thinner in which the anhydride is carried should be free from moisture). The composition may accordingly be formulated in three-pack form, the contents of the separated packs being blended immediately before use. After blending, the composition may remain usable for up to about 8 hours.

Where the composition of the invention is intended for use as a coating composition, it may be applied to a substrate by any of the conventional methods such as spraying, brushing, dipping or flowing. After application to the substrate, the composition may be allowed to cure at ambient temperature. At normal room temperature in the range 15—20°C, the coating is usually touch-dry after 2—3 hours and resistant to petrol after 24 hours. Satisfactory rates of cure are observed even when the ambient temperature is as low as 7°C. The curing process may nevertheless be accelerated if desired by submitting the coating to "low-bake" conditions, viz. a temperature in the region of 80°C for a period of about 15 minutes.

Substrates to which coating compositions according to the invention may be applied successfully include metal surfaces, both primed and unprimed, and plastics materials. The compositions may be employed as undercoats under conventional topcoats, or as topcoats over conventional undercoats, or as both undercoat and topcoat. The coatings adhere well to all such substrates, and they exhibit excellent hardness, water-spot resistance and petrol resistance. The compositions are therefore especially suitable for automobile refinishing applications. In this connection, they are to be preferred, particularly from the point of view of toxicity, over compositions employing a similar hydroxyl group-containing polymer but using a polyisocyanate as the curing agent.

Although the curing compositions of the invention are described herein mainly with reference to their end-use as coating compositions, they may alternatively be formulated as potting compounds or adhesives, or they may be calendered or extrusion-moulded to form sheets or other shaped articles. Other end-uses for the compositions will be apparent to those skilled in the art.

The invention is illustrated by the following Examples, in which parts and percentages are by weight.

## Example 1

The following ingredients were blended:—

| | |
|---|---|
| "Epikure" F50 (Shell Chemicals) | 2.90 g |
| Methyl ethyl ketone | 8.18 g |
| Bis-epoxide ERL 4221 (Union Carbide) | 3.52 g |

To the resulting solution were then added:

| | |
|---|---|
| Hydroxyl group-containing acrylic copolymer solution (see below) | 10.00 g |
| Accelerator AMC—2 (Cordova Chemicals) | 0.28 g |

and the composition thus obtained was applied at once to a substrate as described in Example 7 below.

The hydroxyl group-containing acrylic copolymer used was a copolymer of the following composition:

| | |
|---|---|
| Methyl methacrylate | 21.9% |
| Styrene | 21.9% |
| Hydroxyethyl methacrylate | 16.1% |
| Acrylic acid | 9.1% |
| "Cardura" E10 (Shell Chemicals) | 31.0% |

The "Cardura" E10 was incorporated directly in the mixture of the other ingredients during the copolymerisation of the latter in solution in a 2:1 xylene/ethylene glycol mono ethyl ether acetate mixture at about 140°C in the presence of a peroxide catalyst. The copolymer solution obtained had the following characteristics:

| | |
|---|---|
| Solids content | 58% by weight |
| Acid value | 10.2 mg KOH/gram of solid copolymer |
| Hydroxyl value | 151 mg KOH/gram of solid copolymer |
| Viscosity | 28 poise at 25°C |

Example 2

The following ingredients were blended:

| | |
|---|---|
| "Epikure" F50 | 2.90 g |
| Methyl ethyl ketone | 9.50 g |
| Bis-epoxide ERL 4229 (Union Carbide) | 5.05 g |

To the resulting solution were then added:

| | |
|---|---|
| Hydroxyl group-containing acrylic copolymer (as in Example 1) | 10.00 g |
| Accelerator AMC—2 | 0.40 g |

and the composition thus obtained was applied at once to a substrate as described in Example 7 below.

Example 3

The following ingredients were blended:

| | |
|---|---|
| "Epikure" F50 | 2.90 g |
| Methyl ethyl ketone | 8.18 g |
| Bis-epoxide ERL 4221 (Union Carbide) | 3.52 g |

To the resulting solution were then added:

| | |
|---|---|
| Hydroxyl group-containing acrylic copolymer (as in Example 1) | 10.00 g |
| Benzyltrimethylammonium hydroxide | 0.10 g |

The composition so obtained was applied at once to a substrate as described in Example 7 below.

Example 4

The following ingredients were blended:

| | |
|---|---|
| Bis-anhydride (see below) | 14.80 g |
| Methyl ethyl ketone | 7.50 g |
| Bis-epoxide ERL 4221 | 6.60 g |

To the resulting solution were then added:

| | |
|---|---|
| Hydroxyl group-containing acrylic copolymer (as in Example 1) | 10.00 g |
| Benzyltrimethylammonium hydroxide | 0.13 g |

The composition thus obtained was applied at once to a substrate as described in Example 7 below.

The bis-anhydride solution used was obtained by heating 556.3 g (2.897 molar equivalents) of trimellitic anhydride with 362.2 (0.906 molar equivalents) of polypropylene glycol of mol.wt. 400 and 81.5 g (0.906 molar equivalents) of 1,4-butane diol, and then thinning with 944.2 g of methyl ethyl ketone.

Example 5

The following ingredients were blended:—

| | |
|---|---|
| "Epikure" F50 | 3.15 g |
| Methyl ethyl ketone | 8.50 g |
| Bis-epoxide ERL 4221 | 3.80 g |

To the resulting solution were then added:

| | |
|---|---|
| Hydroxyl group-containing acrylic copolymer (see below) | 10.00 g |
| Accelerator AMC—2 | 0.31 g |

The composition thus obtained was applied at once to a substrate as described in Example 7 below.

The hydroxyl group-containing acrylic copolymer used was a copolymer of methyl methacrylate (80%) and 4-hydroxybutyl acrylate (20%).

Example 6

The following ingredients were blended:

| | |
|---|---|
| "Epikure" F50 | 2.90 g |
| Methyl ethyl ketone | 9.50 g |
| Bis-epoxide ERL 4299 | 5.05 g |

To the resulting solution were then added:

| | |
|---|---|
| Hydroxyl group-containing acrylic copolymer (as in Example 1) | 10.00 g |

The composition thus obtained was applied at once to a substrate as described in Example 7 below.

Example 7

Films of approximately 200 microns thickness were spread upon glass panels measuring 6 × 4 in. (152 × 102 mm) from each of the compositons prepared as described in Examples 1—6 and were allowed to cure at room temperature (20—25°C) for 16 hours.

For a control comparison I, a further film was spread and cured in the same way from a composition prepared by blending 13.52 g of the hydroxyl group-containing acrylic copolymer of Example 1 with 4.54 g of Desmodur N (Bayer AG; "Desmodur" is a Registered Trade Mark), (75% solution in 50:50 xylene:ethylene glycol mono ethyl ether acetate), 0.14 g of a dibutyl tin dilaurate catalyst solution (0.5% solution in xylene), 0.10 g of a zinc octoate catalyst solution (2.2% solution in 9:91 white spirit:butyl acetate) and 4.20 g butyl acetate.

For a second control comparison II, the procedure of Example 4 was repeated, except that the bis-epoxide and the quaternary hydroxide catalyst were both omitted and the amount of methyl ethyl ketone was reduced to 0.9 g.

The resulting films were then assessed for hardness, petrol resistance and water resistance, with the results as shown below:—

| Film from Example No. | Hardness (Erichsen pendulum, seconds) | Petrol Resistance* | Water Resistance* |
|---|---|---|---|
| 1 | 78 | Very slightly softened | Very slightly marked, softened |
| 2 | 50 | Very slightly softened | Very slightly marked, softened |
| 3 | 80 | Slightly softened | Whitened, softened |
| 4 | 77 | Slightly softened | Slightly marked, softened |
| 5 | 91 | — | — |
| 6 | 35 | Slightly softened | Marked, softened |
| Control I | 38 | Softened | Slightly whitened softened |
| Control II | 15 | Severely softened | Whitened, severely softened |

* Determined by placing a petrol-soaked pad upon the film and leaving it there, covered, for 1 hour.
** Determined by placing a spot of water on the film, covering it and leaving it for 2 hours.

Example 8

A. Preparation of White Acrylic Paint Base

A white pigment dispersion was made by ball-milling titanium dioxide pigment (26.42 parts) with a

solution of an acrylic dispersing resin (9.93 parts, 50% solids content) and xylene (9.71 parts). Into this dispersion was blended the hydroxyl group-containing acrylic copolymer solution described in Example 1 (41.2 parts) together with antisettling agent (3.87 parts), flow control additives (0.68 parts), dibutyl tin dilaurate solution (0.49 parts), zinc octoate solution (0.53 parts) and butyl acetate (2.18 parts).

B. Preparation of Room Temperature Curing Paint

The following ingredients were blended:

| | |
|---|---|
| "Epikure" F50 | 31.26 g |
| Methyl ethyl ketone | 93.78 g |
| Bis-epoxide ERL 4221 (Union Carbide) | 37.82 g |

To the resulting solution were added:

| | |
|---|---|
| White acrylic paint base (as described in (A) above) | 200.00 g |
| Accelerator AMC—2 | 3.02 g |

The coating composition thus obtained was sprayed onto a glass panel measuring 6 × 4 ins. (152 × 102 mm) and then allowed to cure at room temperature (20—25°C) for 16 hours.

As a control comparison III, 122.5 g of the white acrylic paint base as described in part A above were mixed with 23.06 g of "Desmodur N" at 75% solids, thinned to spraying viscosity and sprayed onto a glass panel.

The coatings thus obtained were assessed as described in Example 7, with the following results:

| Film | Hardness (Erichsen pendulum, seconds) | Petrol Resistance⁺ | Resistance⁺ |
|---|---|---|---|
| Paint of Example 8 | 29 | Slightly marked | Unaffected |
| Control III | 25 | Severely softened | Severely softened |

⁺ Determined as in Example 7.

Examples 9—14 and Comparative Examples IV—VII

These Examples further illustrate the invention when peformed with a variety of polyanhydrides, polyepoxides and catalysts. The comparative Examples show the effect of omitting either the polyanhydride, or the polyepoxide, or both.

Various combinations of constituents, as set out in Table I and the accompanying identification key, were blended together in the amounts shown, following the general procedure described in Examples 1—7. Each blend was applied to a pair of 150 × 100 mm glass panels in an amount sufficient to give a dry film thickness of about 200µm. One of each pair of coated panels was allowed to cure at room temperature overnight. The other panel of each pair was kept at room temperature for 30 minutes to allow diluent to evaporate, then heated at 80°C for 15 minutes and finally allowed to stand at room temperature overnight. Both panels were then subjected to the petrol resistance, water spot resistance and hardness tests described in Example 7. The tests were repeated after the same panels had been kept at room temperature for one week. The results of these tests are shown in Table II.

Key to symbols used in Table I

Constituent (i)

A Acrylic copolymer as described in Example 1.

Constituent (ii)

N A tris-anhydride obtained by heating together at 235°C trimellitic anhydride (403 parts), acetic anhydride (236 parts) and glycerol (65 parts), the product being diluted with methyl ethyl ketone (430 parts).

O "Epikure" F50 (Shell Chemical Company)

P A copolymer of vinyl versatate (83 parts), vinyl acetate (36 parts) and maleic anhydride (81 parts), dissolved in methyl ethyl ketone (200 parts).

Constituent (iii)

Q Bis-epoxide ERL 4221 (Union Carbide Chemicals)

R "Epikote" 828 (Shell Chemical Company)

Constituent (iv)

S Dimethylbenzylamine, 10% solution in MEK.
T Accelerator AMC—2 (Cordova Chemicals)
U Dibutyltin dilaurate, 0.5% solution in xylene
V Zinc octoate, 2.2% solution in 9:91 white spirit:butyl acetate mixture

Other constituents

W "Desmodur" N (Bayer AG)
MEK Methyl ether ketone
BuAc Butyl acetate

Table I

| Formulation :- | Constituent, parts | Example | | | | | | | | | |
|---|---|---|---|---|---|---|---|---|---|---|---|
| | | 9 | 10 | 11 | 12 | 13 | 14 | IV | V | VI | VII |
| (i) | A | 10.0 | 5.0 | 10.0 | 5.0 | 10.00 | 10.00 | 10.00 | 10.00 | 10.00 | 10.00 |
| (ii) | N | 6.17 | - | - | 3.09 | 6.17 | 6.17 | 6.17 | - | - | - |
| | O | - | 3.17 | - | - | - | - | - | - | - | - |
| | P | - | - | 6.76 | - | - | - | - | - | - | - |
| (iii) | Q | 4.40 | 5.37 | 3.52 | - | 4.40 | 4.40 | - | 4.40 | - | - |
| | R | - | - | - | 3.29 | - | - | - | - | - | - |
| (iv) | S | 0.9 | 1.05 | 0.70 | 0.65 | - | - | 0.90 | 0.90 | - | - |
| | T | - | - | - | - | 0.35 | - | - | - | - | - |
| | U | - | - | - | - | - | - | - | - | - | 0.10 |
| | V | - | - | - | - | - | - | - | - | - | 0.07 |
| | W | - | - | - | - | - | - | - | - | - | 3.36 |
| | MEK (dry) | 5.63 | 9.34 | 4.98 | 3.90 | 5.63 | 5.63 | 1.23 | 6.00 | 1.60 | - |
| | BuAc | - | - | - | - | - | - | - | - | - | 3.28 |

## TABLE II

| Test | Curing Conditions. | Period of Test | Example | | | | | | | | | |
|---|---|---|---|---|---|---|---|---|---|---|---|---|
| | | | 9 | 10 | 11 | 12 | 13 | 14 | IV | V | VI | VII |
| Petrol Resistance | AD | O/N | 1 | 3 | 4 | 2 | 1 | 2 | 2 | 6 | 6 | 1 |
| | | 1 week | 1 | 2 | 3 | 2 | 1 | 2 | 2 | 6 | 6 | 1 |
| | LB | O/N | 1 | 2 | 4 | 2 | 1 | 1 | 2 | 6 | 6 | 1 |
| | | 1 week | 1 | 1 | 3 | 2 | 1 | 1 | 1 | 6 | 6 | 1 |
| Water Resistance | AD | O/N | 2 | 3 | 3 | 2 | 1 | 3 | 4 | 6 | 4 | 2 |
| | | 1 week | 1 | 3 | 3 | 2 | 1 | 3 | 4 | 5 | 4 | 1 |
| | LB | O/N | 1 | 1 | 2 | 2 | 1 | 1 | 4 | 6 | 4 | 1 |
| | | 1 week | 1 | 1 | 2 | 1 | 1 | 1 | 4 | 5 | 3 | 1 |
| Hardness | AD | O/N | 159 | 55 | 26 | 20 | 137 | 151 | 25 | 6 | 17 | 84 |
| | | 1 week | 208 | 112 | 81 | 76 | 196 | 202 | 38 | 5 | 35 | 127 |
| | LB | O/N | 199 | 128 | 70 | 84 | 156 | 195 | 84 | 5 | 49 | 174 |
| | | 1 week | 224 | 161 | 117 | 150 | 200 | 223 | 84 | 5 | 54 | 188 |

Key to symbols :

AD = Airdry (i.e. at room temperature)

LB = Low bake (i.e. at 80°C)

O/N = overnight

Petrol and Water Resistance Ratings :

1 No softening, no surface change

2 Slight softening, no surface change

3 Slight softening, slight surface change

4 Some softening and surface marking

5 Some softening and slight film dissolution

6 Severe softening and extensive film dissolution.

Examples 15—23 and Comparative Examples VIII—XII

These Examples illustrate the invention when performed with a variety of hydroxyl group-containing compounds.

The combinations of ingredients, as set out in Table III and the accompanying indentification key, were blended together in the amounts shown following the general procedure described in Examples 1—7, and the test procedures described in Examples 9—14 were then carried out. The results are shown in Table IV.

Key to additional symbols used in Table III

Constituent (i)

| | |
|---|---|
| B | Copolymer of methyl methacrylate (366 parts), butyl acrylate (105 parts) and hydroxybutyl acrylate (130 parts) dissolved in xylene (600 parts). |
| C | Trimethylolpropane |
| D | Glycerol |
| E | Commercial oligomer of styrene and allyl alcohol ("RJ 100", ex Monsanto Chemical Company). |
| F | Commercial polyester from trimethylolpropane and phthalic anhydride ("Desmophen*650" ex Bayer AG). |
| G | Polypropylene glycol, mol. wt. 400. |
| H | Commercial caprolactone oligomer ("Capa 200" ex Laporte Chemicals). |

## TABLE III

| Formulation Constituent, parts. | Example | | | | | | | | | | | |
|---|---|---|---|---|---|---|---|---|---|---|---|---|
| | 15 | VIII | 16 | 17 | 18 | IX | 19 | X | 20 | 21 | XI | XII |
| (I) B | 10.0 | 10.0 | - | - | - | - | - | - | - | - | - | - |
| (I) C | - | - | 0.5 | - | - | - | - | - | - | - | - | - |
| (I) D | - | - | - | 0.5 | - | - | - | - | - | - | - | - |
| (I) E | - | - | - | - | 2.0 | 5.0 | - | - | - | - | - | - |
| (I) F | - | - | - | - | - | - | 2.0 | 5.0 | - | - | - | - |
| (I) G | - | - | - | - | - | - | - | - | 2.0 | - | - | - |
| (I) H | - | - | - | - | - | - | - | - | - | 2.0 | - | - |
| | - | - | - | - | - | - | - | - | - | - | 10.0 | - |
| | - | - | - | - | - | - | - | - | - | - | - | 10.00 |
| (II) N | 3.32 | - | 4.96 | 7.23 | 5.50 | - | 4.17 | - | 4.17 | 3.19 | - | - |
| (III) Q | 2.37 | - | 3.54 | 5.16 | 3.92 | - | 2.97 | - | 2.97 | 2.28 | - | - |
| (IV) S | 0.50 | - | 0.71 | 1.03 | 0.78 | - | 0.6 | - | 0.6 | 0.46 | - | - |
| MEK (dry) | 2.17 | - | - | - | 5.59 | 5.0 | 4.72 | 5.0 | 4.72 | 4.09 | - | 1.60 |
| Acetone | - | - | 3.75 | 5.22 | - | - | - | - | - | - | - | - |

TABLE IV

| Test | Curing Condit-ions. | Period of test. | Examples | | | | | | | | | | | | | |
|---|---|---|---|---|---|---|---|---|---|---|---|---|---|---|---|---|
| | | | 15 | VIII | 16 | 17 | 18 | IX | 19 | X | 20 | 21 | 22 | XI | 23 | XII |
| Petrol Resistance | AD | O/N | 2 | 6 | 1 | 1 | 1 | 6 | 1 | 3 | 2 | 5 | 4 | 6 | 4 | 6 |
| | | 1 week | 1 | 6 | 1 | 1 | 1 | 6 | 1 | 2 | 1 | 1 | 1 | 6 | 3 | 6 |
| | LB | O/N | 2 | 6 | 1 | 1 | 1 | 6 | 1 | 2 | 2 | 2 | 3 | 6 | 4 | 6 |
| | | 1 week | 1 | 5 | 1 | 1 | 1 | 6 | 1 | 1 | 1 | 1 | 1 | 6 | 3 | 6 |
| Water Resistance | AD | O/N | 2 | 4 | 3 | 3 | 3 | 3 | 3 | 4 | 4 | 3 | 3 | 4 | 3 | 4 |
| | | 1 week | 3 | 4 | 3 | 3 | 1 | 1 | 1 | 4 | 4 | 3 | 3 | 4 | 3 | 4 |
| | LB | O/N | 2 | 4 | 1 | 1 | 1 | 2 | 1 | 4 | 3 | 2 | 1 | 4 | 3 | 4 |
| | | 1 week | 1 | 4 | 1 | 1 | 1 | 2 | 1 | 3 | 3 | 2 | 1 | 2 | 3 | 4 |
| Hardness | AD | O/N | 36 | 10 | 226 | 230 | 226 | 67 | 189 | 8 | 13 | 5 | 105 | 3 | 13 | 3 |
| | | 1 week | 153 | 27 | 230 | 231 | 220 | 135 | 227 | 20 | 57 | 33 | 141 | 3 | 31 | 9 |
| | LB | O/N | 134 | 28 | 237 | 230 | 237 | 214 | 233 | 46 | 33 | 17 | 148 | 3 | 22 | 3 |
| | | 1 week | 182 | 41 | 227 | 230 | 219 | 206 | 220 | 51 | 106 | 56 | 150 | 3 | 50 | 9 |

The various symbols have the same significance as in Table II.

**Claims**

1. A curable composition comprising:

i) a compound containing in the molecule at least two hydroxyl groups and being either a $C_{2-6}$ diol or $C_{3-6}$ triol, or an oligomer of styrene and allyl alcohol, or a polypropylene glycol having an molecular weight in the range 400 to 4000, or an oligomer of caprolactone, or an addition polymer being an acrylic resin obtained by the polymerisation of at least one hydroxyalkyl ester of acrylic acid or methacrylic acid and an hydroxyl-free monomer, or an addition polymer obtained by the copolymerisation of:

a) a monomer which is the 1:1 molar adduct either of an alpha-beta-ethylenically unsaturated carboxylic acid with the glycidyl ester of an aliphatic carboxylic acid or of the glycidyl ester of an alpha-beta-ethylenically unsaturated carboxylic acid with an aliphatic carboxylic acid.

b) a hydroxalkyl ester of an alpha-beta-ethylenically unsaturated carboxylic acid and

c) one or more alpha-beta-ethylenically unsaturated monomers free from hydroxyl groups;

the said adduct being formed before, during or after the copolymerisation reaction, or a polyester condensation polymer obtained by the condensation of a polyhydric alcohol and a poly carboxylic acid;

ii) a compound containing in the molecule at least two cyclic anhydride groups and being an adduct of trimellitic anhydride having the general formula:

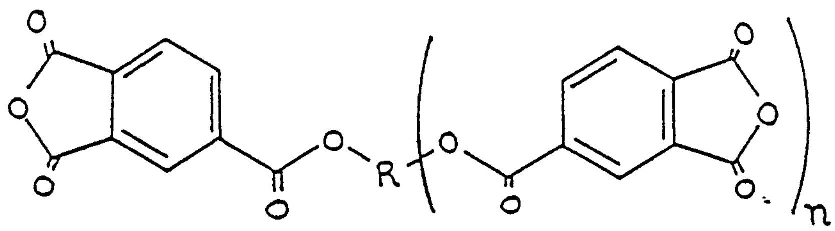

wherein n is 1 or 2, and R is a hydrocarbon radical containing from 2 to 12 carbon atoms, or an anhydride of the general formula:

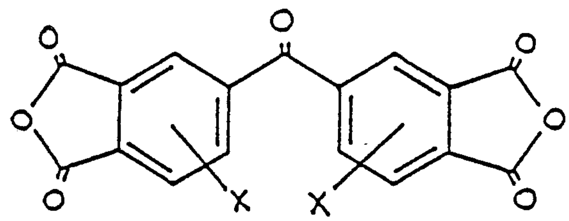

where the groups X are the same or different and represent hydrogen, halogen, $-NO_2$, $-COOH$, or $-SO_3H$;

iii) a compound containing in the molecule at least two epoxide groups and being either an epoxy resin obtained by condensation of epichlorhydrin with bisphenol-A, or a bisepoxide having the general formula:

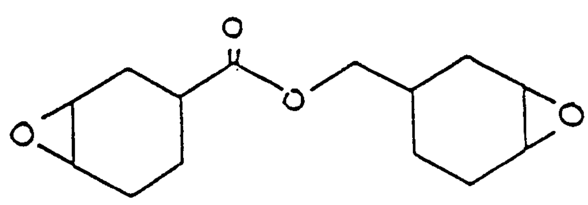

or a bisepoxide having the formula:

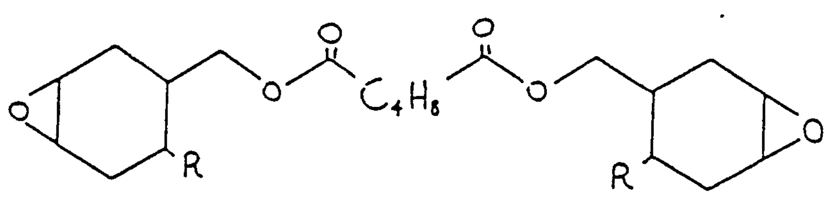

where R is H or $CH_3$.

2. A composition as claimed in claim 1, where the monomer (a) is the adduct of acrylic acid with the

glycidyl ester of a saturated tertiary alkyl carboxylic acid containing from 8 to 10 carbon atoms in the alkyl group, the monomer (b) is hydroxyethyl methacrylate and the monomers (c) are styrene and methyl methacrylate.

3. A composition as claimed in claim 1, where the polyester is obtained by the condensation of glycerol or trimethylol propane with phthalic anhydride, optionally together with dehydrated castor oil.

4. A composition as claimed in any one of claims 1 to 3, where the component (i) is the form of a sterically stabilised dispersion obtained by the polymerisation of monomers, in an organic liquid which is not a solvent for the said component, in the presence of an amphiphatic stabilising agent.

5. A composition as claimed in claim 1, where the component (ii) is the adduct of trimellitic anhydride with ethylene glycol or with glycerol.

6. A composition as claimed in any one of claims 1 to 5, comprising as an additional component (iv) a catalyst for the reaction between epoxide groups and carboxyl groups.

7. A composition as claimed in any one of claims 1 to 6, where the component (ii) is employed in a proportion equivalent to approximately one anhydride group per hydroxyl group in the component (i), and the component (iii) is employed in a proportion equivalent to approximately two epoxide groups for each carboxyl group present in the notional adduct from components (i) and (ii).

8. A composition as claimed in claim 6, where the catalyst component (iv) is employed in an amount of from 1 percent to 10 percent of the weight of the epoxy component (iii).

9. A coating composition incorporating a curable composition as claimed in any one of claims 1 to 8 together with one or more conventional additives.

10. A substrate which has been coated with a coating composition as claimed in claim 10.

**Patentansprüche**

1. Härtbare Zusammensetzung, welche folgendes enthält:

i) eine Verbindung, die im Molekül mindestens zwei Hydroxylgruppen enthält und entweder ein $C_{2-6}$-Diol oder $C_{3-6}$-Triol ist, oder ein Oligomer von Styrol und Allylalkohol oder ein Polypropylenglycol mit einem Molekulargewicht im Bereich von 400 bis 4000 oder ein Oligomer von Caprolacton oder ein Additionspolymer, das ein Acrylharz ist, welches durch Polymerisation von mindestens einem Hydroxyalkylester von Acrylsäure oder Methacrylsäure und einem hydroxylfreien Monomer erhalten worden ist, oder ein Additionspolymer, das erhalten worden ist durch Copolymerisation von:

a) einem Monomer, welches das molare 1:1-Addukt von entweder einer alpha-beta-ethylenisch ungesättigten Carbonsäure mit dem Glycidylester einer aliphatischen Carbonsäure oder von dem Glycidylester einer alpha-beta-ethylenisch ungesättigten Carbonsäure mit einer aliphatischen Carbonsäure ist,
b) einem Hydroxyalkylester einer alpha-beta-ethylenisch ungesättigten Carbonsäure und
c) einem oder mehreren alpha-beta-ethylenisch ungesättigten Monomeren, die frei von Hydroxylgruppen sind;

wobei das Addukt vor, während oder nach der Copolymerisationsreaktion gebildet worden ist, oder ein Polyesterkondensationspolymer, das durch Kondensation eines mehrwertigen Alkohols und einer Polycarbonsäure erhalten worden ist;

ii) eine Verbindung, die im Molekül mindestens zwei cyclische Anhydridgruppen enthält und ein Trimellithsaureanhydridaddukt der allgemeinen Formel

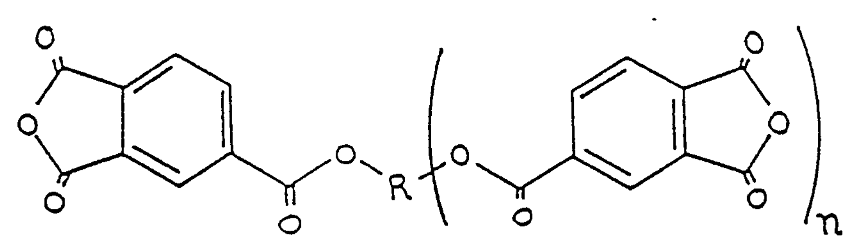

worin n für 1 oder 2 steht und R für ein Kohlenwasserstoffradikal mit 2 bis 12 Kohlenstoffatomen steht, oder ein Anhydrid der allgemeinen Formel

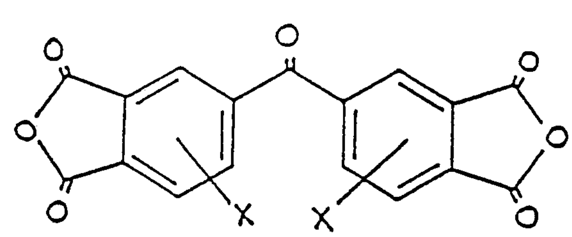

worin die Gruppen X gleich oder verschieden sind und für Wasserstoff, Halogen, $-NO_2$, $-COOH$ oder $-SO_3H$ stehen, ist;

iii) eine Verbindung, die im Molekül mindestens zwei Epoxidgruppen enthält und entweder ein durch Kondensation von Epichlorhydrin mit Bisphenol-A erhältliches Epoxyharz oder ein Bisepoxid der allgemeinen Formel

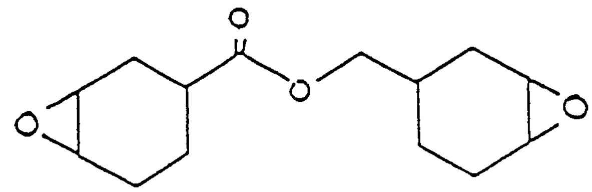

oder ein Bisepoxid der Formel

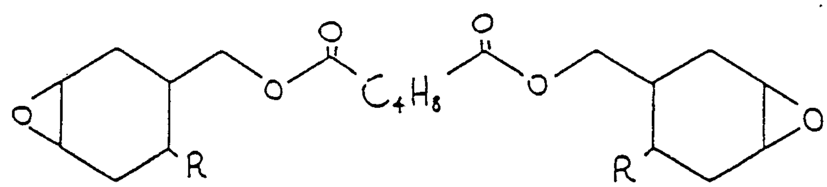

worin R für oder $CH_3$ steht, ist.

2. Zusammensetzung nach Anspruch 1, bei welcher das Monomer (a) das Addukt von Acrylsäure mit dem Glycidylester einer gesättigten tertiären Alkylcarbonsäure mit 8 bis 10 Kohlenstoffatomen in der Alkylgruppe ist, das Monomer (b) Hydroxyethylmethacrylat ist und die Monomere (c) Styrol und Methylmethacrylat sind.

3. Zusammensetzung nach Anspruch 1, bei welcher der Polyester erhalten worden ist durch Kondensation von Glycerin oder Trimethylolpropan mit Phthalsäureanhydrid und gegebenenfalls mit entwässertem Castoröl.

4. Zusammensetzung nach einem der Ansprüche 1 bis 3, bei welcher die Komponente (i) in Form einer sterisch stabilisierten Dispersion vorliegt, die erhalten worden ist durch Polymerisation von Monomeren in einer organischen Flüssigkeit, die ein Nichtlöser für die genannte Komponente ist, in Gegenwart eines amphiphatischen Stabilisierungsmittels.

5. Zusammensetzung nach Anspruch 1, bei welcher die Komponente (ii) das Addukt von Trimellithsäureanhydrid mit Ethylenglycol oder Glycerin ist.

6. Zusammensetzung nach einem der Ansprüche 1 bis 5, welche als zusätzliche Komponente (iv) einen Katalysator für die Reaktion zwischen Epoxidgruppen und Carboxylgruppen enthält.

7. Zusammensetzung nach einem der Ansprüche 1 bis 6, bei welcher die Komponente (ii) in einem Anteil vorliegt, der annähernd einer Anhydridgruppe je Hydroxylgruppe in der Komponente (i) äquivalent ist, und die Komponente (iii) in einem Anteil vorliegt, der annähernd zwei Epoxidgruppen für jede im gedanklichen Addukt aus den Komponenten (i) und (ii) vorliegende Carboxylgruppe äquivalent ist.

8. Zusammensetzung nach Anspruch 6, bei welcher die Katalysatorkomponente (iv) in einer Menge von 1 bis 10%, bezogen auf das Gewicht der Epoxykomponente (iii), vorliegt.

9. Beschichtungszusammensetzung, welche eine härtbare Zusammensetzung nach einem der Ansprüche 1 bis 8 zusammen mit ein oder mehreren üblichen Additiven enthält.

10. Substrat, das mit einer Beschichtungszusammensetzung nach Anspruch 9 beschichtet worden ist.

**Revendications**

1. Composition réticulable comprenant:

(i) un composé dont la molécule contient au moins deux radicaux hydroxyle et qui est un $C_2-C_6$ diol ou $C_3-C_6$ triol, ou un oligomère du styrène et de l'alcool allylique, ou un polypropylèneglycol ayant un poids moléculaire de l'intervalle de 400 à 4000, ou un oligomère de caprolactone, ou un polymère d'addition qui est une résine acrylique obtenue par polymérisation d'au moins un ester hydroxyalcoylique de l'acide acrylique ou méthacrylique et d'un monomère exempt de radicaux hydroxyle, ou un polymère d'addition obtenu par copolymérisation:

(a) d'un monomère qui est le produit d'addition molaire 1:1 soit d'un acide carboxylique α,β-éthyléniquement insaturé avec l'ester glycidylique d'un acide carboxylique aliphatique, soit de l'ester glycidylique d'un acide carboxylique α,β-éthyléniquement insaturé avec un acide carboxylique aliphatique,

(b) d'un ester hydroxyalcoylique d'un acide carboxylique α,β-éthyléniquement insaturé, et

(c) d'un ou plusieurs monomères α,β-éthyléniquement insaturés exempts de radicaux hydroxyle, ce produit d'addition étant formé avant, pendant ou après la réaction de compolymérisation, ou un polyester de condensation obtenu par condensation d'un alcool polyhydroxylé et d'un acide polycarboxylique,

(ii) un composé dont la molécule contient au moins deux radicaux anhydride cycliques et qui est un produit d'addition de l'anhydride trimellitique de la formule générale:

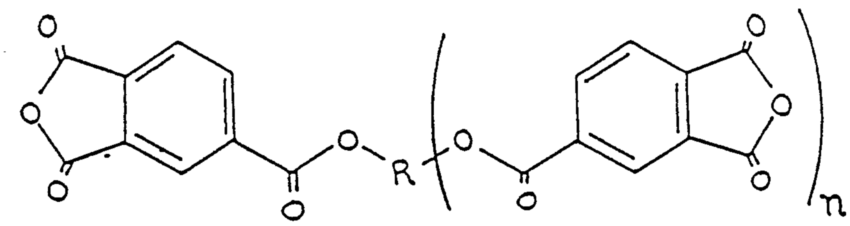

où n est 1 ou 2, et R est un radical hydrocarboné comptant 2 à 12 atomes de carbone, ou un anhydride de la formule générale:

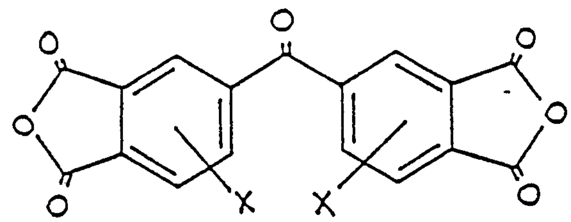

où les radicaux X sont indentiques ou différents et représentent un atome d'hydrogène ou un radical halogéno, —$NO_2$, —COOH ou —$SO_3H$,

(iii) un composé dont la molécule contient au moins deux radicaux époxyde et qui est une résine epoxyde obtenue par condensation de l'épichlorhydrine avec le Bisphénol A, ou un bis-époxyde de la formule générale:

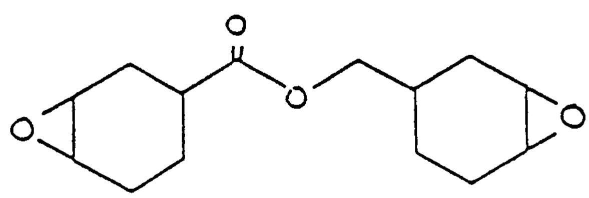

ou un bis-époxyde de formule:

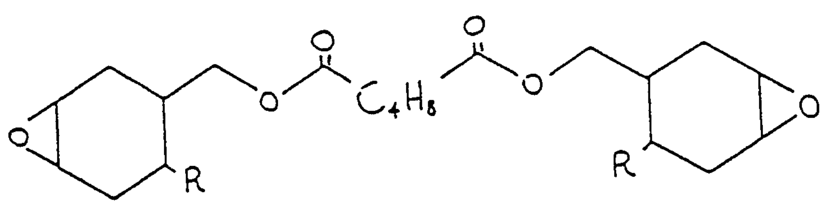

où R est H ou $CH_3$.

2. Composition suivant la revendication 1, dans laquelle le monomère (a) est le produit d'addition de l'acide acrylique.avec l'ester glycidylique d'un acide t-alcoylcarboxylique saturé comptant 8 à 10 atomes de carbone dans le radical alcoyle, le monomère (b) est le méthacrylate d'hydroxyéthyle et les monomères (c) sont le styrène et le méthacrylate de méthyle.

3. Composition suivant la revendication 1, dans laquelle le polyester est obtenu par condensation du glycérol ou du triméthylolpropane avec l'anhydride phtalique, facultativement conjointement avec de l'huile de ricin déshydratée.

4. Composition suivant l'une quelconque des revendications 1 à 3, dans laquelle le composant (i) se trouve sous la forme d'une dispersion stabilisée stériquement obtenue par la polymérisation de monomères, dans un liquide organique qui n'est pas un solvant pour ce composant, èn présence d'un agent stabilisant amphipathique.

5. Composition suivant la revendication 1, dans laquelle le composant (ii) est le produit d'addition de l'anhydride trimellitique avec l'éthylèneglycol ou avec le glycérol.

6. Composition suivant l'une quelconque des revendications 1 à 5, comprenant comme composant supplémentaire (iv) un catalyseur pour la réaction entre les radicaux époxyde et les radicaux carboxyle.

7. Composition suivant l'une quelconque des revendications 1 à 6, dans laquelle le composant (ii) est utilisé en une proportion équivalente à environ un radical anhydride par radical hydroxyle dans le composant (i) et le composant (iii) est utilisé en une proportion équivalente à environ deux radicaux époxyde par radical carboxyle présent dans le produit d'addition formé en principe par les composants (i) et (ii).

8. Composition suivant la revendication 6, dans laquelle le composant catalytique (iv) est utilisé en une quantité de 1% à 10% du poids de composant époxyde (iii).

9. Composition de revêtement comprenant une composition réticulable suivant l'une quelconque des revendications 1 à 8, conjointement avec un ou plusieurs additifs classiques.

10. Substrat qui a été revêtu à l'aide d'une composition de revêtement suivant la revendication 9.